# EUROPEAN PATENT APPLICATION

(11) **EP 2 586 554 A1**
(43) Date of publication of application: **01.05.2013**
(21) Application number: 11186936.8
(22) Date of filing: 27.10.2011
(51) Int. Cl.: B23D 57/00, B28D 5/04, B65H 49/18, B65H 54/28, B65H 59/38, B65H 59/40, B65H 57/28

(54) **Wire saw device with two independent wire webs and method thereof**

(71) Applicant: Applied Materials Switzerland Sàrl, 1033 Cheseaux-sur-Lausanne (CH)
(72) Inventor: Schmid, Andreas, 3280 Meyriez (CH); Genonceau, Franck, 01170 Echenevex (CH)
(74) Representative: Zimmermann & Partner

(57) **Abstract**

A wire saw device for sawing a workpiece is described. The wire saw device includes a main frame for supporting a housing, wherein the housing includes a first housing portion and a second housing portion being separated from the first housing portion, and a first wire guide assembly with at least two first wire guide cylinders for guiding a first wire to form at least one first wire web with at least one first working area, wherein the first wire guide assembly is provided within the first housing portion, a second wire guide assembly with at least two second wire guide cylinders for guiding a second wire to form at least one second wire web with at least one second working area, wherein the second wire guide assembly provided within the second housing portion, wherein the first housing portion and the second housing portion are adapted for maintaining the first and the second wire guide assemblies independent from each other, a first wire management unit for guiding the first wire, and a second wire management unit for guiding the second wire.

## Description

### TECHNICAL FIELD OF THE INVENTION

Embodiments of the present invention relate to a wire saw device, and a method for operating a wire saw device. More particularly, they relate to a wire saw device with improved up-scaling characteristics, and for cutting or sawing hard materials such as blocks of silicon or quartz, e.g., for cutting silicon wafers, for a squarer, for a cropper, or the like.

### BACKGROUND OF THE INVENTION

Wire saw devices exist for cutting blocks or bricks, thin slices, e.g., semiconductor wafers, from a piece of hard and brittle material such as silicon. In such devices, a stretched wire is fed from a spool and is both guided and tensioned by pulleys for guiding the wire in the cutting area. The wire that is used for sawing is generally provided with an abrasive material. As one option, the abrasive material can be provided as slurry. This may be done shortly before the wire touches the material to be cut. Thereby, the abrasive is carried to the cutting position by the wire for cutting the material. As another option, the abrasive can be provided on the wire with a coating. For example, diamond particles can be provided on a metal wire, e.g., with a coating, wherein the diamond particles are imbedded in the coating of the wire. Thereby, the abrasive is firmly connected with the wire.

Generally, the yield of wire saw devices is already at a sophisticated level. However, there is a desire for a further improvement, particularly in light of the desire to have a high yield at high throughput for photovoltaic (PV) applications.

Thereby, it has to be considered that the wires for sawing PV wafers or the like are tensioned and moved at very high speed. The wires are fed from and to spools over one or more pulleys providing a wire management and/or wire tensioning. The pulleys can, for example, re-direct the wire. The existence of pulleys can result in a higher likelihood of wire breakage, e.g. during emergency stop where the inertia of the pulleys might hinder immediate stopping of the pulleys. Wire breakage can result in a complete loss of the load, i.e. the workpieces which are momentarily processes in a wire saw device.

Wafering PV capacity requirements for gigawatt-plants along with a continuous desire to reduce the value $/Watt for PV modules desires increased manufacturing capacities. In the past plants for manufacturing a larger number of wafers have been realized by providing a plurality of wire saw devices for wafering PV wafers. However, maintenance and wire breakage still delimits the throughput and the yield and can be improved.

A multi-wire slurry saw is nowadays the standard and most productive tool for wafer manufacturing for PV applications. It is commonly designed as stand-alone tools. The tool has five main functional groups: slicing head, slurry management, wire management, cooling group and electrical cabinet/control unit. A change in paradigm is needed in order to achieve the desired yield at high throughput for manufacturing PV wafers.

### SUMMARY OF THE INVENTION

In light of the above, wire saw device for a workpiece according to independent claim 1, and method of operating a wire saw device according to independent claim 10 are provided. Further aspects, advantages, and features of the present invention are apparent from the dependent claims, the description, and the accompanying drawings.

According to one embodiment, wire saw device for sawing a workpiece is provided. The wire saw device includes a main frame for supporting a housing, wherein the housing includes a first housing portion and a second housing portion being separated from the first housing portion, and a first wire guide assembly with at least two first wire guide cylinders for guiding a first wire to form at least one first wire web with at least one first working area, wherein the first wire guide assembly is housed by the first housing portion, a second wire guide assembly with at least two second wire guide cylinders for guiding a second wire to form at least one second wire web with at least one second working area, wherein the second wire guide assembly is housed by the second housing portion, a first wire management unit for guiding the first wire, and a second wire management unit for guiding the second wire.

According to one embodiment, wire saw device for sawing a workpiece is provided. The wire saw device includes a main frame for supporting a housing, wherein the housing includes a first housing portion and a second housing portion being separated from the first housing portion, and a first wire guide assembly with at least two first wire guide cylinders for guiding a first wire to form at least one first wire web with at least one first working area, wherein the first wire guide assembly is provided within the first housing portion, a second wire guide assembly with at least two second wire guide cylinders for guiding a second wire to form at least one second wire web with at least one second working area, wherein the second wire guide assembly provided within the second housing portion, wherein the first housing portion and the second housing portion are adapted for maintaining the first and the second wire guide assemblies independent from each other, a first wire management unit for guiding the first wire, and a second wire management unit for guiding the second wire.

According to a further embodiment, a method of operating a wire saw device is provided. The method includes operating a first wire guide assembly with at least two first wire guide cylinders for guiding a first wire to form at least one first wire web with at least one first working area in a first portion of a housing, operating a second wire guide assembly with at least two second wire guide cylinders for guiding a second wire to form at least one second wire web with at least one second working area in a second portion of the housing, which is independent of the first portion of the housing.

Embodiments are also directed at apparatuses for carrying out the disclosed methods and include apparatus parts for performing each described method step. These method steps may be performed by way of hardware components, a computer programmed by appropriate software, by any combination of the two or in any other manner. Furthermore, embodiments according to the invention are also directed at methods by which the described apparatus operates. It includes method steps for carrying out every function of the apparatus.

### BRIEF DESCRIPTION OF THE DRAWINGS

So that the manner in which the above recited features of the present invention can be understood in detail, a more particular description of the invention, briefly summarized above, may be had by reference to embodiments. The accompanying drawings relate to embodiments of the invention and are described in the following:
- Fig. 1: shows a wire saw device according to embodiments described herein, and including two independent cutting areas in two independent chamber portions, i.e. housing portions;
- Fig. 2: shows another wire saw device according to embodiments described herein, and including two independent cutting areas in two independent chamber portions, i.e. housing portions;
- Fig. 3: shows wire guide assemblies arranged according to embodiments described herein, and including two independent cutting areas separated from each other;
- Fig. 4: shows wire guide assemblies arranged in another manner and according to embodiments described herein, and including two independent cutting areas separated from each other;
- Fig. 5: shows wire guide assemblies arranged in yet another manner and according to embodiments described herein, and including a plurality of working areas partially separated from each other;
- Fig. 6: shows wire guide assemblies arranged according to embodiments described herein, and including two independent cutting areas separated from each other, wherein an offset between the wire guide assemblies is provided in two directions;
- Fig. 7: shows yet another wire saw device according to embodiments described herein, and including two independent cutting areas in two independent chamber portions, i.e. housing portions; and
- Fig.8: shows a flow chart illustrating methods of operating wire saw devices according to embodiments described herein.

### DETAILED DESCRIPTION OF EMBODIMENTS

Reference will now be made in detail to the various embodiments of the invention, one or more examples of which are illustrated in the figures. Within the following description of the drawings, the same reference numbers refer to same components. Generally, only the differences with respect to individual embodiments are described. Each example is provided by way of explanation of the invention and is not meant as a limitation of the invention. Further, features illustrated or described as part of one embodiment can be used on or in conjunction with other embodiments to yield yet a further embodiment. It is intended that the description includes such modifications and variations.

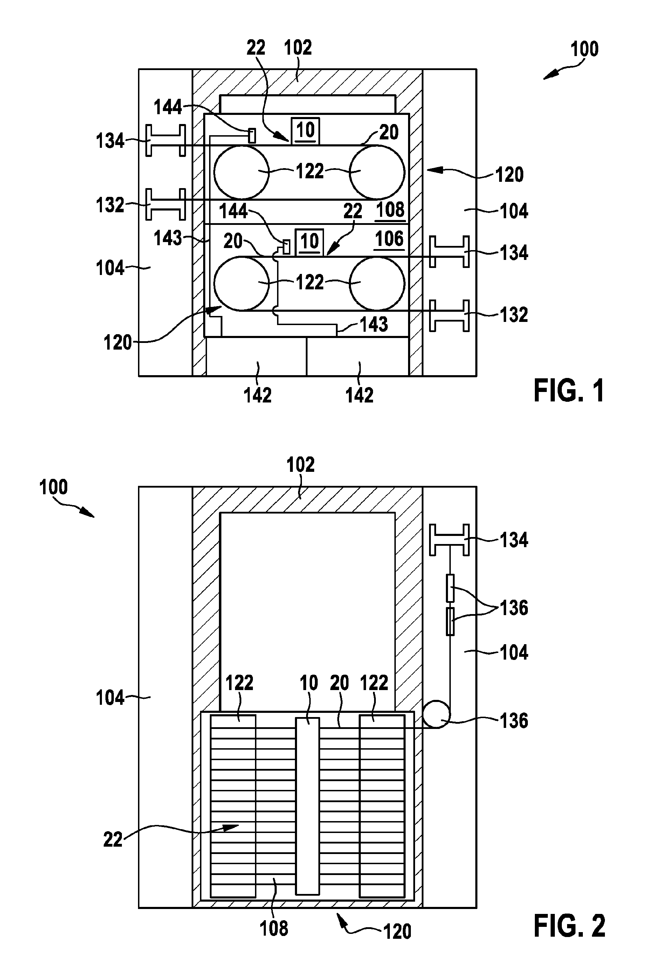

Figure 1 shows the wire saw device 100. The wire saw device 100 includes a mainframe 102. For example, the mainframe 102 supports the housing and/or components of the wire saw device 100. Typically, the mainframe is a rigid frame and 102 include a base on which the wire saw device stands. According to different embodiments, which can be combined with other embodiments described herein, the wire saw devices herein can be utilized for cutting hard materials, for example silicon or other semiconductor materials, with slurry or for cutting with diamond wire or the like. In the past, attempts have been made to increase the effective cutting area in one wire saw device and, thereby, increase the throughput of the device. However, particularly for wafering machines, the yield and, thereby, the throughput, can be deteriorated due to wire breakage. Thereby, the entire load of the wire saw device might not be usable anymore. According to embodiments described herein, while the effective cutting area tends to be increased or at a high level, independent wire webs are provided in the same machine. According to typical embodiments, the independent wire webs can be configured to be operated separately. For example, one wire web can cut one or more workpieces, while another wire web is maintained. For example, the other web can be build for maintenance, components relating to the other web can be repaired or exchanged for maintenance, and/or workpieces are loaded from or to the other wire web. The wire saw device 100 shown in figure 1 has a first wire guide assembly 120 and a second wire guide assembly 120. Typically, each of the wire guide assemblies includes at least two wire guide cylinders 122 for providing the wire web, on which workpieces 10 can be cut. Typically, the wire 20 provides at least one working area 22. As will be described in more detail below, for example, one wire web can also provide two working areas.

The wire saw device 100 includes compartments 104. Spools 132 and 134 are provided in the respective compartments 104. According to typical embodiments, also wire management units can be provided in the compartments 104. Typically the wire management units are configured for handling the wire and tensioning the wire, wherein the wire is guided to the wire webs.

According to typical embodiments, the first spool 132 can be provided for providing new wire to the wire guide assembly 120 and the second spool 134 can be provided for taking up the used wire from the wire guide assembly 120. Generally, the spools in which new wire is provided are of a different type (say, a first spool type) than the spools onto which the used wire is wound (say, a second spool type). For example, the spools in which new wire is provided may be disposable spools from a wire manufacturer. Such spools may, on the other hand, be unsuitable for receiving used wire because they sometimes do not withstand the high wire tension of the used wire. In order to support these different spool types during primary-to-secondary-spool sawing, the primary spool shaft (i.e. the spool shaft of the primary wire handling section) may be adapted for carrying a spool of the first type, and the secondary spool shaft (i.e. the spool shaft of the secondary wire handling section) is adapted for carrying a spool of the second type, i.e. the second type being different from the first type.

Also, in some embodiments, which can be combined with any other embodiments herein, the wire management sections may support bidirectional sawing. Herein, bidirectional sawing is understood to be a sawing process during which first the wire is transported from the primary spool to the secondary spool, and thereafter is transported back from the secondary spool to the primary spool, and again from the primary spool to the secondary spool etc. Thus, for bidirectional sawing the (primary) spool 132 is adapted for providing wire to the wire web and is also adapted for receiving used wire from the wire web. Likewise, a secondary spool 134 may be adapted for providing wire to the wire web and is also adapted for receiving used wire from the wire web.

For the bidirectional sawing, a controller is adapted for sending actuating commands to the primary spool shaft and to the secondary spool shaft, the actuating commands causing, in a first step, the first spool shaft to unwind wire to the second spool, and causing, in a second step, the second spool shaft to unwind wire to the first spool.

According to yet further embodiments, which can be combined with other embodiments described herein, the first wire guide assembly 120 is provided in the chamber or housing portion 106 whereas the second wire guide assembly is provided in the chamber or housing portion 108. The chambers or housing portions, in which the wire guide assemblies 120 are provided, can also be referred to as the cutting chambers. In order to be able to utilize independent and separate operation of the wire guide assemblies in the respective cutting chamber, control of parameters in the respective cutting chambers can be conducted independently. For example, the pressure, the temperature, humidity, and/or other parameters can be controlled in the respective housing portions or cutting chambers.

The workpieces 10 are typically supported in the wire saw device 100 by a support table or a support beam for the workpieces 10. The cut of the workpieces is conducted by a relative movement of the wire web with respect to the workpiece 10. Thereby, typically the workpiece 10 is moved with respect to the wire web, which is provided by the wire guide assembly 120. Yet, it might also be possible in some cases to move the web or both the web and the workpieces.

Accordingly, also other operational conditions like the wire speed, the speed of the movement of the support table or support beam, slurry flow, and/or slurry conditions can be provided independently for the separate wire guide assemblies or cutting mechanisms, respectively. As shown in figure 1, a first slurry tank 142 and a second slurry tank 142 are provided, wherein each slurry tank provides slurry for a distribution system 143, which corresponds to one of the wire guide assemblies 120. Thereby, each distribution system provides the slurry to a nozzle 144, which provides the slurry in the respective cutting area or cutting areas. Even though, examplarily reference is made to slurry herein, in the case of cutting with diamond wire, the tanks and distribution systems can also be provided for a cooling fluid provided in the cutting area. That is, the slurry, which includes abrasive material and provides cooling to the cutting area, can be replaced by a cooling fluid because the abrasive material is already provided on the wire in the case diamond wire is used. According to yet further embodiments, which can be combined with other embodiments described herein, in addition to the nozzles 144 shown on one side of the workpieces 10 further nozzles 144 on the other side of the workpieces can be provided for the same working area. Thereby, for example, bi-directional sawing can be applied as nozzles for providing slurry or cooling fluid are provided for two sawing directions.

Figure 2 illustrates further embodiments of the wire saw device 100. For example, FIG. 2 can be regarded, according to some embodiments, a top view of FIG. 1. The wire saw device 100 includes a mainframe 102 and housing portions 104. Within the top view shown in figure 2, it can be seen that the wire 20 provides a wire web by having the wire guided over the wire guide cylinders 122. Thereby, at least one working area is provided and the workpiece 10 can be cut into slices, for example semiconductor wafers. The wire guide assembly 120, which is shown in figure 2, is provided in a housing portion or cutting chamber 108. The second wire guide assembly can be, for example, provided below the first wire guide assembly shown in figure 2.

Fig. 2 shows for the purpose of simplification only one spool 134. The wire 20 is provided by a wire management unit includes one or more pulleys 136 to the wire guide cylinders 122 and the working area, respectively.

As described herein, a wire management unit will be understood as a device handling the supply of wire to a cutting area or working area of a wire saw device, e.g. a wafering wire saw device, and from a cutting area or working area of a wire saw device. Typically, the wire saw includes at least two wire guides for transporting and guiding the wire in a wire moving direction, while the wire management unit provides control of the wire tension. Furthermore, the wire provided by the wire management unit forms a wire web in the cutting area. Often, a portion of a wire web will be considered as the web formed by a single wire management unit. According to some embodiments, more than one wire can be provided such that the entire wire web is formed by more than one portion of the wire web. It should be understood that a wire web may contain more than one working area portion, which is defined as an area in which a sawing process is performed. Thus, according to some embodiments described herein, a wire web can have multiple areas that are formed each by a wire from different wire management units.

For modern wire saw devices like e.g. wafering wire saw devices, there is the desire to cut a hard material, such as semiconductor material, for example, silicon, quartz, or the like, at high speeds. The wire speed, that is, the speed of the wire moving through the wire saw device, the wire management unit and the material to be sawed, respectively, can be, for example, 10 m/s or higher. Typically, the wire speed can be in a range of 8 to 20 m/s. However, higher wire speeds of 25 m/s or 30 m/s, or even 40 m/s or higher can also be desirable and could be realized under certain conditions.

For unwinding and winding the wire at the desired wire speed, the spool rotates with a rotation speed of up to several thousand rotations per minute. For example, 1000 to 2000 rpm can be provided for unwinding and winding the wire. The pulleys can be provided for wire tracking, i.e. compensation of the position where the wire leaves spool 134, wire tensioning, and/or wire guidance. As will be understood, similar pulley assemblies can be provided between the working area and the spools for all spools shown in the other embodiments described herein. Particularly for bi-directional sawing the wire management units, i.e. the respective spool assembly, can be provided in a similar or even symmetric manner for the unwinding side and the winding side.

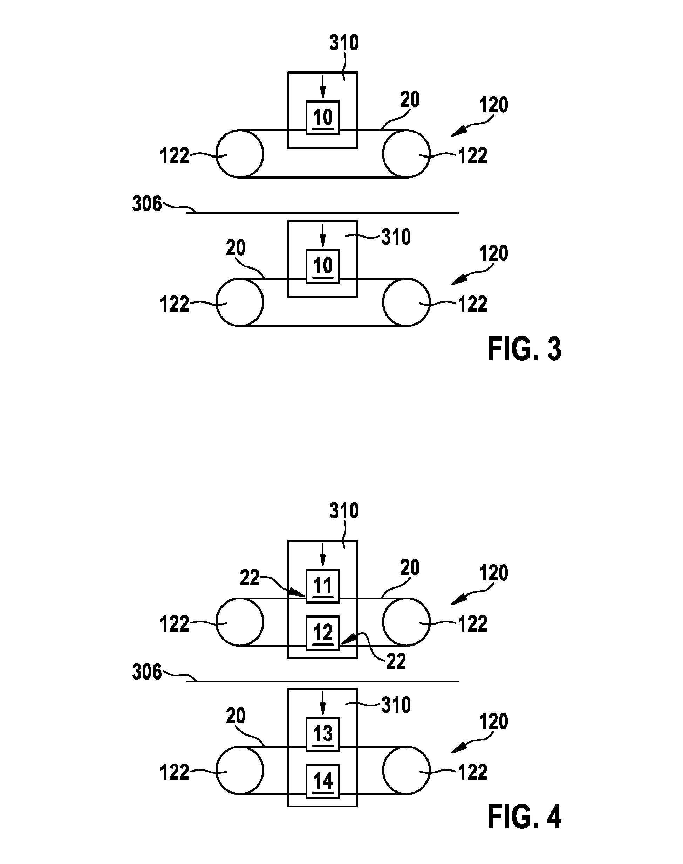

For wire tacking, a first pulley can be provided as a movable pulley that is longitudinally movable in a direction parallel to the spool axis. The movable pulley can be equipped with a tracking system allowing it to follow the position of the wire moving from one side of the spool to the other, so that the wire always enters the pulley tangentially. Such a pulley is described, e.g., in the European patent application No. EP 09153051.9, which is herewith incorporated herein by reference, see in particular the description of the tracking system on Fig. 3A and Fig. 3B and the corresponding description thereof in European patent application No. EP 09153051.9. However, in view of the sometimes considerable tension of the wire, it is difficult to support the movable pulley sufficiently firmly so that the movable pulley can bear the high wire tension.

Within the wire saw device 100, there is a wire management unit. According to different embodiments, a wire saw device can be a cropper, a squarer for squaring a hard material into bricks, a wire saw device for slicing or wafering a workpiece or a multiple wire saw device for cutting a workpiece into a plurality of slices or wafers.

The above-described wire management units are particularly useful if thin wires, e.g. with slurry, or wires with a coating, e.g. a diamond coating, are used. Accordingly, for wafering, in embodiments, which can be combined other embodiments described herein, the wire handling sections and wire saw devices described herein are adapted for thin wires having a diameter below about 200 µm, such as diameters between about 80 µm and about 150 µm. Further, the wire handling sections and wire saw devices described herein are adapted for coated wires, for example a wire having a nickel coating with diamond particles embedded therein. Such wires may typically have a core diameter of below about 200 µm, such as diameters between about 80 µm and about 150 µm For thin wires a twisting of the wire might increase the risk of breaking of the wire or of damaging the coating, so that a twist-free operation is advantageous. For squaring applications, the wire diameters can be about 400 µm or below, for example, 250 µm to 350 µm.

Figure 3 shows a portion of the wire saw device illustrating a first embodiment. A first wire guide assembly 120 and a second wire guide assembly 120 are provided. As indicated by separation element 306, the wire guide assemblies are separated such that they can be operated independently from each other. Typically the wire saw device can have two independent chambers or housing portions. For Example, one of them can be on top of the other as illustrated in Figures 1 and 3. In each of the housing portions, which are separated, for example by separation element 306, a wire guide assembly 120 having wire guide cylinders 122 are provided. The wire 20 forms a wire web on the wire guide cylinders 122. As described above, each cutting chamber or housing portion and/or each wire guide assembly, respectively, can have an independent wire management. Thereby, control of the wire, for examples wire tension and wire supply to the cutting area can be provided individually. Typically, there will be a feeding spool and take-up spool for the respective wire guide assemblies. As described with respect to Figure 1, slurry or coolant distribution can also be provided independently for the individual wire guide assemblies 120. For example, there can be separated to distribution systems. Thereby, according to some embodiments, each distribution system can include a tank, a pump, piping or conduits, respectively, and slurry or cooling flow control.

As shown in figure 3, the workpiece 10 is provided at a workpiece support 310 for each of the wire guide assemblies 120. As Indicated by the arrow in the workpiece support 310, the workpieces 10 can be moved downward with respect to the wire 20. The movement of the workpieces 10 can thereby be conducted independent from each other. Accordingly, sawing operation in one working area shown in figure 3 can be conducted independent of sawing operation in another working area shown in Figure 3. Thereby, in the event of wire breakage in one of the working areas, the other workpiece 10 can continue the sawing process and the loss of processed workpieces is reduced. Further, if one of the portions need to be maintained and/or cut workpieces are exchanged with uncut-workpieces, sawing can be continued in the other portion. This increases the availability of the tool and, thereby, also the throughput. According to some embodiments, which can be combined with other embodiments described herein, the wire saw device as described herein are particularly wafering wire saw devices. For wafering wire saw devices an interruption of the sawing process can be considered particularly difficult. Accordingly, separating the load of the machine into several smaller pieces can be beneficial with respect to the yield of the wire saw device. This is because loss of the workpieces in one area does not necessarily result in loss of the workpieces in another area, which might for example occur on wire breakage.

Figure 4 illustrates yet another embodiment. Therein, the first wire guide assembly 120 and the second wire guide assembly 120 are provided, which are again separated as indicated by separation element 306. As compared to figure 3, the embodiment shown in Figure 4 includes four workpieces 11-14. Thereby, two workpieces are mounted to the workpiece support 310 and two further workpieces are mounted to the another workpiece support 310, which can be independently controlled of the first workpiece support. Thereby, cutting of two workpieces in the respective portions of the wire saw device can be conducted independently and/or separately from each other.

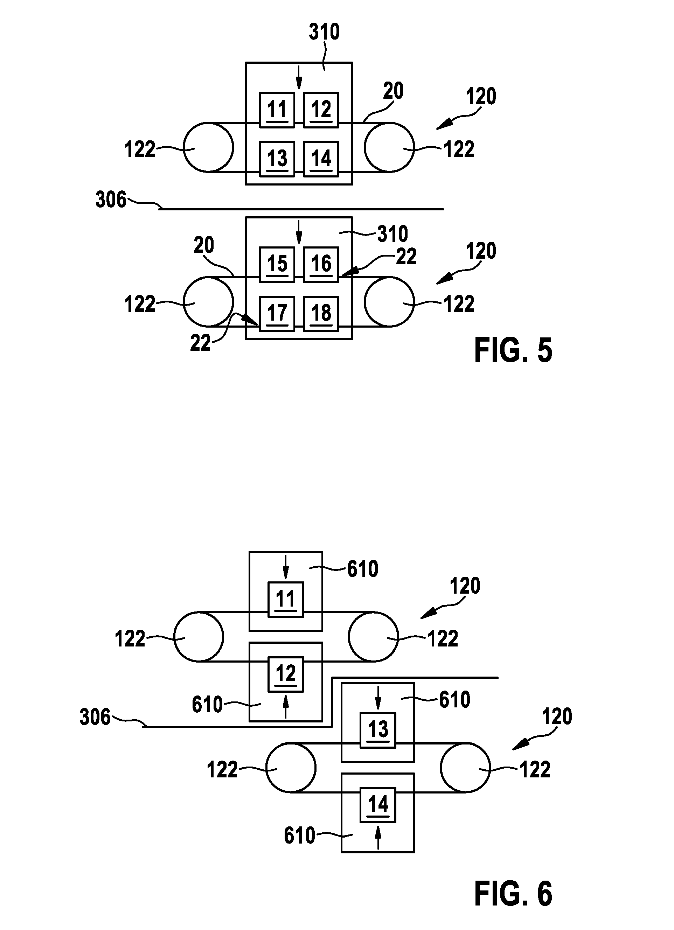

In the embodiment shown in Figure 5, four workpieces are supported by each of the workpiece supports 310. Accordingly, four workpieces are In the housing portion, in which the first wire guide assembly 120 is provided. Four further workpieces are cut in a separate housing portion, in which the second wire guide assembly 120 is provided. The embodiments shown in Figure 4 and 5 include a wire web, which is formed by the wire 20, and which has two working areas each. According to some embodiments, which can be combined with other embodiments described herein, a pair of wire guide cylinders 122 can provide a wire web with an upper working area and a lower working area. One or more workpieces 10-18 can be processed in each of the working areas.

According to yet further embodiments, as for example shown in figure 6, the first wire guide assembly 120 and the second wire guide assembly 120 can be re-arranged as compared to figures 3 to 5. Thereby, the first wire guide assembly 120 and the second wire guide assembly 120 can be arranged above each other, whereas there is a horizontal offset. This allows for having the workpiece 12 and the workpiece 13 be arranged at least partially next to each other in a horizontal plane. Thereby, the vertical space, which is used by the wire guide device, can be reduced. As described above, there is the separation element 306 between the first wire guide assembly 120 and the second wire guide assembly 120. Thereby, independent and separate operation thereof can be provided.

According to embodiments described herein, the separation of the wire guide assemblies and wire management units allows for a secure operation if the respective portions guiding the wire are provided in a housing portion. Thereby, housing portions for one of the wire guide assemblies or wire management units can be opened and an operator can work on these components while another housing portion is closed such that the wire can be transported at high speed without providing any risk for an operator. Thus, according to some embodiments, which can be combined with other embodiments described herein, the different housing portions have a separate openings and/or access doors such that the wire guide assembly, the wire management units and other components which might still be under operation are operated in an enclosed environment whilst the other components can be maintained, workpieces can be loaded or unloaded, or the like.

According to some embodiments and as shown in FIG. 6, the separation unit 306 and the respective housing portions are shaped such that at least portions of the components in the first housing portion and the second housing portion are arranged horizontally next to each other. As shown in figure 6, the wire guide assemblies have support table 610. As indicated by the arrows, it is possible that one support table 610 moves downward on a working area of the wire guide assembly 120 while another support table 610 moves upward with respect to another working area of the same wire guide assembly 120.

As described above, according to some typical embodiments, the two wire guide cylinders 122 of the wire guide assembly 120 can have an comparably large diameter, for example 500, 600, 700 or even 800 mm and above in order to allow at least one workpiece or portions of two workpieces be located in an area between the wire guide cylinders during cutting.

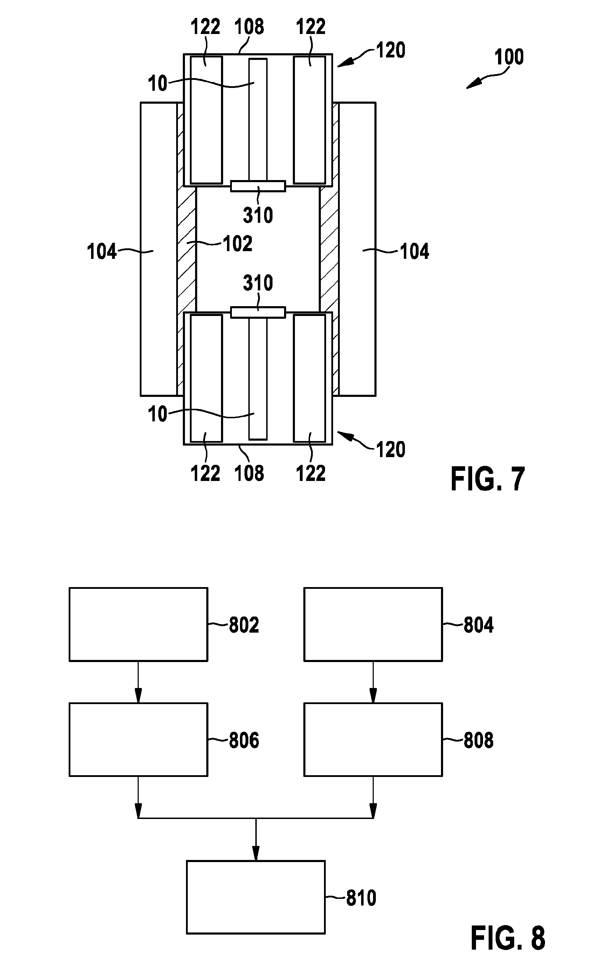

According to yet further embodiments, which can be combined with other embodiments described herein, the first wire guide assembly 120 and the second wire guide assembly 120 might not necessarily be provided on top of each other. As shown in figure 7, the first wire guide assembly is provided on one side of the wire guide device 100 and the second wire guide assembly is provided on another side of the wire guide assembly. Thereby, typically the wire guide assemblies 120 can be provided back-to-back and/or on opposing sides of the wire saw device 100.

The wire saw device 100 includes a mainframe 102 and housing portions 104. The wire provides a wire web by having the wire guided over the respective, e.g. two, wire guide cylinders 122. Thereby, at least one working area is provided and the workpiece 10, which is supported by support table 310, can be cut into slices, for example semiconductor wafers. The wire guide assembly 120 is provided in a housing portion or cutting chamber 108. The second wire guide assembly can be provided in the other housing portion 108.

Figure 8 illustrates typical embodiments of methods of operating a wire saw device. Therein, in step 802, the first wire guide assembly of the wire saw device can be operated in the first portion of a housing, wherein the first wire forms the wire web. In step 804, the second wire guide assembly can be operated in a second portion of the housing, wherein the second portion of the housing is independent of the first portion of the housing. As described above, the housing portions can be opened and closed independent from each other such that a secure operation of one wire guide assembly can be provided while the access opening port or door of the of the wire guide assembly is in an open position. In further steps 806 and 808 parameters like temperature, humidity, pressure, wire speed, workpiece support table speed, and/or wire tension can be controlled independently for the respective portions of the wire saw device. Further, as shown in step 810, the respective portions of the wire saw device can be controlled by a common control unit, which has typically the common user interface.

While the foregoing is directed to embodiments of the invention, other and further embodiments of the invention may be devised without departing from the basic scope thereof, and the scope thereof is determined by the claims that follow.

## Claims

1. A wire saw device (100) for sawing a workpiece (10), comprising:
a main frame for supporting a housing, wherein the housing includes a first housing portion and a second housing portion being separated from the first housing portion, and;
a first wire guide assembly (120) with at least two first wire guide cylinders (122) for guiding a first wire (20) to form at least one first wire web with at least one first working area (22), wherein the first wire guide assembly is housed by the first housing portion;
a second wire guide assembly (120) with at least two second wire guide cylinders (122) for guiding a second wire (20) to form at least one second wire web with at least one second working area (22), wherein the second wire guide assembly is housed by the second housing portion;
a first wire management unit for guiding the first wire; and
a second wire management unit for guiding the second wire.

2. The wire saw device according to claim 1, further comprising
a first slurry or cooling fluid distribution system for distributing slurry or cooling fluid to the first wire guide assembly; and
a second slurry or cooling fluid distribution system for distributing slurry or cooling fluid to the second wire guide assembly.

3. The wire saw device according to claim 2, further comprising:.
a first slurry or cooling fluid tank for provided slurry or cooling fluid to the first slurry or cooling fluid distribution system; and
a second slurry or cooling fluid tank for provided slurry or cooling fluid to the slurry or cooling fluid distribution system.

4. The wire saw device according to any of claims 1 to 3, wherein the first wire guide assembly is provided at one first side of the main frame and the second wire guide assembly is provided is provided at another second side of the main frame, particularly wherein the first side and the second side are opposing sides.

5. The wire saw device according to any of claims 1 to 3, wherein the first wire guide assembly is provided above the second wire guide assembly.

6. The wire saw device according to any of claims 1 to 5, wherein the first wire guide assembly is provided with a horizontal offset with respect to the second wire guide assembly

7. The wire saw device according to any of claims 1 to 6, wherein the diameters of the at least two first wire guide cylinders (122) and the diameters of the at least two second wire guide cylinders (122) are 250 mm or above, typically between 300 mm and 700 mm, more typically between 500 mm and 700 mm.

8. The wire saw device according to any of claims 1 to 7, wherein the first wire guide assembly comprises at least two first working areas and wherein the second wire guide assembly comprises at least two second working areas.

9. The wire saw device according to any of claims 1 to 8, further comprising:
a controller, particularly with a user interface, wherein the controller controls the first wire guide assembly and the second wire guide assembly.

10. A method of operating a wire saw device (100), the method comprising:
operating a first wire guide assembly with at least two first wire guide cylinders (122) for guiding a first wire (20) to form at least one first wire web with at least one first working area (22) in a first portion of a housing;
operating a second wire guide assembly with at least two second wire guide cylinders (122) for guiding a second wire (20) to form at least one second wire web with at least one second working area (22) in a second portion of the housing, which is independent of the first portion of the housing.

11. The method according to claim 10, further comprising:
controlling a temperature, a humidity and/or a pressure in the first portion of the housing independent from a temperature, a humidity and/or a pressure in the second portion of the housing.

12. The method according to any of claims 10 to 11, further comprising:
controlling operation of the first wire guide assembly and the second wire guide assembly by a common controller, typically with one user interface.

13. The method according to any of claims 10 to 12, further comprising:
exchanging a workpiece in the first portion of the housing while cutting a workpiece in the second portion of the housing or exchanging workpiece in the second portion of the housing while cutting a workpiece in the first portion of the housing.

14. The method according to any of claims 10 to 13, further comprising:
maintaining components or a wire web in the first portion of the housing while cutting a workpiece in the second portion of the housing or maintaining components or a wire web in the second portion of the housing while cutting a workpiece in the first portion of the housing.

15. The method according to any of claims 10 to 14, wherein the first wire guide assembly provides at least two first working areas (22) and wherein a first workpiece is moved relative to a first working area of the at least two first working areas (22) in a first direction, and another workpiece is moved relative to a second working area of the at least two first working areas (22) in a second direction being opposite to the first direction.
